# EUROPÄISCHE PATENTSCHRIFT

(11) **EP 4 499 390 B1**
(45) Veröffentlichungstag und Bekanntmachung des Hinweises auf die Patenterteilung: **17.12.2025**
(21) Anmeldenummer: 23710717.2
(22) Anmeldetag: 09.03.2023
(51) Int. Cl.: B29C 70/16, B29C 70/32, B29C 53/56, B29C 53/82, F17C 1/16

(54) **VERFAHREN ZUR HERSTELLUNG EINER POLKAPPENVERSTÄRKUNG UND EINES DRUCKBEHÄLTERS SOWIE DRUCKBEHÄLTER MIT POLKAPPENVERSTÄRKUNG**
METHOD FOR PRODUCING A POLAR-CAP REINFORCEMENT AND A PRESSURE VESSEL, AND PRESSURE VESSEL HAVING POLAR-CAP REINFORCEMENT
PROCÉDÉ DE FABRICATION D'UN RENFORT DE CAPUCHON POLAIRE ET RÉCIPIENT SOUS PRESSION, ET RÉCIPIENT SOUS PRESSION AYANT UN RENFORT DE CAPUCHON POLAIRE

(30) Priorität: 03.05.2022 DE 102022110846
(43) Veröffentlichungstag der Anmeldung: 05.02.2025
(73) Patentinhaber: Bäumer, Thomas, 41836 Hückelhoven (DE)
(72) Erfinder: Bäumer, Thomas, 41836 Hückelhoven (DE)
(74) Vertreter: Lohmanns Lohmanns & Partner mbB
(86) Internationale Anmeldenummer: PCT/EP2023/055975
(87) Internationale Veröffentlichungsnummer: WO 2023/213465

(56) Entgegenhaltungen:
- JP-A- 2020 520 828

## Beschreibung

Die Erfindung betrifft ein Verfahren zur Herstellung einer Polkappenverstärkung eines faserverstärkten Druckbehälters und ein Verfahren zur Herstellung eines Druckbehälters mit wenigstens einer solchen Polkappenverstärkung. Die Erfindung betrifft ferner einen Druckbehälter mit einer solchen Polkappenverstärkung aus Umfangswicklungen.

Druckbehälter spielen beim Thema der Energiewende eine wichtige Rolle, weil Gase wie Erdgas oder Wasserstoffgas für die verschiedenen Anwendungen zunächst gespeichert werden müssen. Dabei ist es in vielen Fällen vorteilhaft, die Gase unter hohem Druck zu speichern, weil dadurch eine größere Gasmenge in kleineren Volumen gespeichert werden kann. Dies ist z.B. für den Wasserstoffantrieb von Bussen, Lastkraftwagen, Personenkraftwagen oder Flugzeugen der Fall.

Um das Gewicht für diese mobile Anwendungen so gering wie möglich zu halten, werden vorzugsweise Druckbehälter vom Typ 4 eingesetzt, insbesondere faserverstärkte Kunststoffliner, wobei vorzugsweise eine CFK-Verstärkung eingesetzt wird. Der hohe Bedarf an leichten Druckbehältern, die vorzugsweise in großen Teilen aus Faserverbundwerkstoffen hergestellt werden, kann jedoch zu der Situation führen, dass nicht genügend Rohmaterial (Kohlenstofffasern) zur Verfügung stehen. Schon aus diesem Grund ist es sinnvoll, den Einsatz der Faserverstärkung so niedrig wie möglich zu halten, damit der Materialverbrauch pro gespeichertem Gasvolumen so gering wie möglich wird. Ferner sollen die Behälter möglichst leicht sein und die Produktionskosten gering gehalten werden, was ebenfalls für möglichst wenig Materialverbrauch bei der Faserverstärkung spricht.

Faserverstärkte Druckbehälter des Typs 4 bestehen üblicherweise aus einem zylindrischen Mittelteil, an dem sich beidseitig jeweils eine gewölbte Polkappe anschließt, die den Druckbehälter verschließt. Für die Abdichtung des Druckbehälters wird ein innenliegender Kunststoffliner benutzt, der die entsprechende Form aufweist (Zylinder und beidseitige Polkappen) und mit einer Außenschicht aus Faserverbundmaterial verstärkt wird. Ein häufig angewendetes Verfahren zur Verstärkung des Kunststoffliners ist das Filament-Winding Verfahren, bei dem hochfeste Fasern mit einer Matrix imprägniert und auf den rotierenden Kunststoffliner gewickelt werden. Nach Vernetzung des Matrixsystems ist der Behälter ausreichend verstärkt, dass er den hohen Drücken für die Gasspeicherung standhalten kann.

Die Dimensionierung der Faserverstärkung kann dabei grob in zwei Bereiche aufgeteilt werden, und zwar in die Verstärkung des zylindrischen Teils des Druckbehälters und die Verstärkung der gewölbten Polkappen. Im zylindrischen Bereich des Behälters sind die Radialkräfte doppelt so hoch wie die Axialkräfte (Kesselformel), d.h. es müssen ungefähr doppelt so viele Fasern in Radialrichtung gewickelt werden wie in Axialrichtung. Der Polkappenbereich ist wegen seiner dreidimensionalen Kontur deutlich schwieriger zu dimensionieren, weil sich dort keine Umfangsverstärkung wickeln lässt, zumindest nicht direkt und unter "industriellen Maßstäben", nämlich mit hoher Geschwindigkeit und hohem Durchsatz.

Der Grund hierfür ist, dass die Fasern nicht auf der schrägen Fläche einer Polkappe haften und liegen bleiben, vielmehr rutschen sie die Polkappe hinab und verhindern damit, dass eine konstruktionsgerechte Polkappenverstärkung möglich ist. Stand der Technik ist hierbei immer noch, dass die notwendige Radialverstärkung der Faserverstärkung durch viele steile Helixwicklungen (Kreuzwicklungen unter einem bestimmten Winkel zur Wickelachse) erzeugt werden muss. Dabei sind sehr viel mehr Wicklungen notwendig, die viele unterschiedliche Wickelwinkel aufweisen, als es bei einer reinen Radialverstärkung unter 90° eigentlich notwendig wäre. Das führt dazu, dass auch im zylindrischen Teil des Druckbehälters viele axiale Faserlagen liegen, die eigentlich nur im Polkappenbereich genutzt werden.

Da der Faserverbrauch und die damit verbundenen Herstellungskosten speziell bei langen Behältern sehr hoch sind, ist es erstrebenswert, den Faserverbrauch zu reduzieren. Dies ist beispielsweise möglich, wenn es gelingt, die Polkappenverstärkung und die dazu notwendigen Fasern nur im Polkappenbereich eines Liners einzusetzen. Beispielsweise sind aus dem Stand der Technik Verfahren bekannt, die eine gezielte Polkappenverstärkung ermöglichen. Verschiedene Ansätze zur Minimierung des Aufwandes für eine solche gezielte Polkappenverstärkung sind zwar prinzipiell möglich, aber haben nicht die hohe Produktivität, die für eine industrielle Fertigung mit hohen Stückzahlen notwendig ist. Die hohen Investitionssummen bei der Errichtung einer Produktion machen es dabei notwendig, dass ein maximaler Durchsatz ermöglicht wird, und der Fertigungsprozess nicht durch einen "langsamen Produktionsschritt" aufgehalten wird.

Es liegt daher nahe, diesen Produktionsschritt - Verstärkung der Polkappen in Umfangsrichtung - von dem Gesamtwickelprozess abzukoppeln und separat durchzuführen, um dann den vorbereiteten Kunststoffliner mit den Polkappenverstärkungen dem finalen Wickelprozess zuzuführen. Beispielsweise kann ein Polkappenbereich mit einem sogenannten Fiber-Placement-Verfahren verstärkt werden, bevor der eigentliche Wickelprozess durchgeführt wird. Dabei werden vorimprägnierte Faserbänder (Prepregs) von einem Roboter mittels eines Ablegekopfes auf die Polkappen abgelegt. Nachteilig bei diesem Verfahren ist es jedoch, dass es sich um ein gesondertes, vorgeschaltetes Herstellverfahren handelt, bei dem vorimprägnierte Bänder verarbeitet werden. Die eingesetzten Matrixwerkstoffe beim Fiber-Placement-Verfahren und beim anschließenden Wickelverfahren sind ferner unterschiedlich und müssen sich miteinander verbinden können.

Darüber hinaus gibt es andere vorgeschaltete Herstellverfahren, mit denen sich eine Polkappenverstärkung erzeugen lässt. Oftmals werden hierbei Strukturen an einem Liner vorgesehen, an denen aufzuwickelnde Fasern Halt finden, so dass sie nicht abrutschen. Durch eine entsprechende Ausformung und Anordnung solcher Haltestrukturen lassen sich die Polkappen vor dem zylindrischen Bereich eines Druckbehälters bewickeln. Beispielsweise offenbart die JP 2010-236614 A ein Verfahren zur Herstellung eines Verbunddruckbehälters, bei dem an den Polkappen eines Liners Haltestrukturen in Form von umlaufenden Nuten oder einzelnen Noppen ausgebildet sind. Mittels dieser Haltestrukturen werden zunächst die Polkappen bewickelt, anschließend der zylindrische Bereich des Liners. Abgeschlossen wird das Verfahren mit einer Wickelschicht, die sowohl Polkappen als auch zylindrischen Bereich bedeckt. Auch die JP 2020 520 828 A offenbart beispielhaft ein Verfahren zur Herstellung eines Druckbehälters. Beispielsweise offenbart auch die Patentschrift DE 10 2018 110 049 B4 ein Verfahren zum Herstellen einer Polkappenverstärkung im Polkappenbereich eines Druckbehälters, bei dem eine Haltevorrichtung mit mehreren abstehenden Halteelementen im Bereich eines Endabschnittes des zylindrischen Mittelbereichs eines Liners angebracht wird. Eine Polkappenverstärkung wird dann durch Wickeln von Faserwerkstoff um wenigstens einen Teil des Polkappenbereiches und den Endabschnitt mit der Haltevorrichtung hergestellt, wobei der Faserwerkstoff mit Richtungsumkehr um die abstehenden Halteelemente der Haltevorrichtung geführt wird.

Auch sind Wickelvorrichtungen bekannt, mit denen versucht wird, im Polkappenbereich eines Liners ausschließlich Umfangswicklungen herzustellen. Beispielsweise offenbart die Patentschrift DE 10 2015 007 047 B4 ein Verfahren, bei dem die Außenfläche einer Polkappe durch mehrere Formgebungsteile definiert wird. Diese Formgebungsteile werden nacheinander von einer Wickelachse des Wickelkörpers beginnend nach außen auf der Wickelachse angeordnet, und ein Spalt zwischen dem Wickeldorn und dem jeweils vorher angeordneten Formgebungsteil wird mit Umfangswicklungen ausgefüllt. Anschließend werden die Formgebungsteile entfernt.

Ausgehend hiervon ist es die Aufgabe der Erfindung, ein verbessertes Verfahren zur Herstellung einer Polkappenverstärkung eines faserverstärkten Verbunddruckbehälters bereitzustellen, mit dem sich die Menge an erforderlichen Verstärkungsfasern ohne erheblich erhöhten Herstellungsaufwand reduzieren lässt, wobei das Verfahren insbesondere eine hohe Produktivität bei der Herstellung des Verbunddruckbehälters gewährleistet.

Erfindungsgemäß wird diese Aufgabe durch ein Verfahren zur Herstellung einer Polkappenverstärkung gemäß dem unabhängigen Anspruch 1 gelöst. Vorteilhafte Weiterbildungen des Verfahrens ergeben sich aus den Unteransprüchen 2-7. Ferner wird die Aufgabe durch ein zugehöriges Verfahren zur Herstellung eines Druckbehälters mit einer so hergestellten Polkappenverstärkung nach einem der Ansprüche 8 und 9 und einen Druckbehälter mit Umfangswicklungen nach Anspruch 10 gelöst.

Es ist darauf hinzuweisen, dass die in den Ansprüchen einzeln aufgeführten Merkmale in beliebiger, technisch sinnvoller Weise miteinander kombiniert werden können und weitere Ausgestaltungen der Erfindung aufzeigen. Die Beschreibung charakterisiert und spezifiziert die Erfindung insbesondere im Zusammenhang mit den Figuren zusätzlich.

Mit der Erfindung lässt sich ein Druckbehälter herstellen, umfassend einen Innenbehälter und eine auf den Innenbehälter gewickelte Außenschicht aus einem Verbundfaserwerkstoff, Hierbei können bekannte Materialien für den Innenbehälter und die Außenschicht aus einem Faserwerkstoff verwendet werden. Bei dem Innenbehälter handelt es sich vorzugsweise um einen Kunststoffliner aus einem thermoplastischen Kunststoff, der insbesondere durch Extrusionsblasformen hergestellt sein kann. Als Faserwerkstoff zur Verstärkung des Innenbehälters mit einer Außenschicht kann beispielsweise eine Kohlenstoff-, Aramid- oder Glasfaser mit einer geeigneten Matrix aus einem Harz verwendet werden.

Ein Druckbehälter muss dabei geeignet axial und radial verstärkt werden, wenn der Innenbehälter/Liner nur die Dichtfunktion übernimmt und den Wickelkern für ein Wickelverfahren darstellt. Die Axialverstärkung eines gewickelten Druckbehälters Typ 4 verläuft von einem Pol zum anderen und umschließt üblicherweise an beiden Enden auch den sogenannten Bossanschluss, der dadurch fest eingebunden wird. Die typischen Wickelwinkel betragen dabei 5-15°, weil damit noch kein wesentlicher Abfall der Festigkeitswerte im Laminat gegenüber einem 0°-Laminat vorliegt. Im zylindrischen Teil des Liners ist eine Radialverstärkung mit den Standardwickelverfahren möglich.

Die Erfindung macht es nun möglich, einen Liner - vorzugsweise einen Kunststoffliner - in einem separaten Prozess im Polkappenbereich durch reine radiale Faserlagen zu verstärken. Der dann mit zwei Polkappenverstärkungen vorbereitete Liner wird dem eigentlichen Wickelprozess zugeführt und kann dann mit den Radialwicklungen im zylindrischen Teil sowie mit den notwendigen Axialwicklungen (und komprimierenden Radialwicklungen) versehen werden.

Das erfindungsgemäße Verfahren dient dabei zunächst zur Herstellung einer Polkappenverstärkung eines Druckbehälters, aufweisend einen Innenbehälter und eine auf den Innenbehälter gewickelte Außenschicht aus Verstärkungsfasern, wobei der Innenbehälter einen zylindrischen Mittelbereich und zwei gewölbte Polkappenbereiche aufweist, welche die Öffnungen des zylindrischen Mittelbereiches abschließen. Das Verfahren weist folgende Schritte auf:
a) Bereitstellen einer Wickelvorrichtung, aufweisend zwei voneinander beabstandete Wickelplatten, die zwischen sich einen Spalt ausbilden, in dem sich ein Wickelkern befindet;
b) Herstellen eines mit Harz getränkten Faserlaminats innerhalb dieses Spaltes, welches durch wiederholte Umwicklung des Wickelkerns in Umfangsrichtung erzeugt wird;
c) Lösen des Faserlaminats von der Wickelvorrichtung und Aufbringen des Faserlaminats auf ein erstes Formwerkzeug, welches die nach außen gewölbte Außenkontur eines Polkappenbereiches des Innenbehälters aufweist;
d) Positionieren eines zweiten Formwerkzeugs, welches als Innenkontur die Außenkontur der herzustellenden Polkappenverstärkung aufweist, um das Faserlaminat zwischen dem ersten Formwerkzeug und dem zweiten Formwerkzeug einzuschließen;
e) Ausformen der Form der Polkappenverstärkung zwischen den beiden Formwerkzeugen, indem das Faserlaminat zwischen den beiden Formwerkzeugen unter Druck verformt wird;
f) Aushärten des Faserlaminats zu der Polkappenverstärkung.

Das erfindungsgemäße Verfahren bringt den Vorteil mit sich, dass damit eine Polkappenverstärkung mit reinen Umfangswicklungen hergestellt werden kann. Dies verringert den Faserbedarf für den gesamten Druckbehälter erheblich, da sich hierdurch unnötige Wicklungen im zylindrischen Bereich vermeiden lassen. Faserlaminat mit reinen Umfangswicklungen wird zunächst in einem Wickelwerkzeug hergestellt und anschließend in die äußere Faserverstärkung eines Druckbehälters integriert.

Beim Verformen des mit Harz getränkten Faserlaminats auf die Endkontur können die radial gewickelten Schichten aufeinander abgleiten, ohne dass es zu Verwerfungen kommt.

In einer ersten Ausführungsform der Erfindung ist das erste Formwerkzeug der gewölbte Polkappenbereich des Innenbehälters selbst, für welchem die Polkappenverstärkung herzustellen ist, und das zweite Formwerkzeug wird nach dem Aushärten des Faserlaminats zu der Polkappenverstärkung entfernt. Der Innenbehälter selbst wird somit als Formwerkzeug genutzt und die Polkappenverstärkung wird direkt auf dem Polkappenbereich eines Innenbehälters erzeugt, indem das imprägnierte bzw. gelierte Faserlaminat auf dem Innenbehälter abgelegt und dort verformt und ausgehärtet wird. Dies hat insbesondere den Vorteil, dass die Innenkontur der Polkappenverstärkung exakt an die Außenkontur de Polkappenbereiches des Innenbehälters angepasst ist. Die ausgehärtete Polkappenverstärkung kann dann auf dem jeweiligen Innenbehälter verbleiben, oder sie wird entfernt und in einem späteren Produktionsstadium auf einen anderen Innenbehälter aufgebracht.

In einer alternativen Ausführungsform der Erfindung ist das erste Formwerkzeug ein separates Werkzeug, welches die nach außen gewölbte Außenkontur des Polkappenbereiches des betreffenden Innenbehälters abbildet und zum Formen der Innenkontur des Polkappenverstärkung genutzt wird. Die ausgehärtete Polkappenverstärkung wird dann aus den beiden Formwerkzeugen entformt und auf den gewölbten Polkappenbereich eines Innenbehälters aufgebracht. Vorzugsweise wird die Polkappenverstärkung dort fixiert, was beispielsweise durch Verklebung erfolgt. Diese Vorgehensweise hat insbesondere den Vorteil, dass mehrere Polkappenverstärkungen in einem separaten Herstellungsprozess erzeugt und gelagert werden können, bis sie dann in einem optimierten Prozess in die Faserverstärkung eines Liners integriert werden.

Die Kontur der Radialverstärkung im Polkappenbereich kann unterschiedlich je nach Behälterauslegung ausgeführt sein. Die Innenkontur des zweiten Formwerkzeugs gibt dabei die Außenkontur der Polkappenverstärkung vor und durch die Verformung des Faserlaminats zwischen den beiden Formwerkzeugen kann die Form des auszuhärtenden Faserlaminats genauer definiert werden. Allerdings ist es vorteilhaft, wenn die grundsätzliche Form des in der Wickelvorrichtung erzeugten Faserlaminats schon weitestgehend der Form entspricht, welche die herzustellende Polkappenverstärkung haben soll. Dann müssen sich die Umfangswicklungen im Faserlaminat nicht zu stark gegeneinander verschieben. Die einfachste Kontur entsteht, wenn in der Wickelvorrichtung der Abstand zwischen den Wickelplatten konstant ist. Die Radialverstärkung des Faserlaminats hat dann zunächst in axialer Richtung gesehen überall die gleiche Wandstärke, was im folgenden Verformungsprozess weitestgehend beibehalten werden kann, so dass lediglich die Wölbung geformt wird. Soll die Wandstärke beispielsweise nach außen zunehmen, wird eine Wickelvorrichtung mit Wickelplatten verwendet, deren Abstand zueinander zum Wickelkern hin abnimmt. Auch dies kann im folgenden Verformungsprozess beibehalten werden.

Um das imprägnierte Faserlaminat einfach von den Wickelplatten lösen zu können, ist in einer Ausführungsform vorgesehen, dass die Innenseiten der Wickelplatten vor der Herstellung des Faserlaminats jeweils mit einer lösbaren Folie belegt werden, die anschließend zusammen mit dem Faserlaminat von der Wickelvorrichtung gelöst werden. Bei der Folie handelt es sich insbesondere um eine dehnfähige und hitzebeständige Folie. Vorzugsweise wird das Faserlaminat auch zusammen mit den Folien zwischen den Formwerkzeugen verformt und ausgehärtet. Dies hat den Vorteil, dass die Folien beim Handling des imprägnierten Faserlaminats zur Formstabilität des Laminats beitragen. Ferner erleichtern die Folien das Entformen des ausgehärteten Faserlaminats aus den Formwerkzeugen. Die Folien verbinden sich jedoch vorzugsweise nicht fest und stoffschlüssig mit dem Faserlaminat, sondern sie können wieder entfernt werden. Dabei wird zumindest die äußere Folie einer aus dem Faserlaminat erzeugten Polkappenverstärkung wieder entfernt, bevor darauf die Außenwicklung des Druckbehälters erzeugt wird, damit sich die Außenwicklung mit der Polkappenverstärkung verbinden kann. Die innere Folie kann ebenfalls entfernt werden oder sie verbleibt optional zwischen dem Innenbehälter und der Polkappenverstärkung. Dies ist insbesondere der Fall, wenn die Polkappenverstärkung direkt auf dem nach außen gewölbten Polkappenbereich eines Kunststoffbehälters erzeugt wurde.

Das Lösen des Faserlaminats von der Wickelvorrichtung und Einbringen zwischen den beiden Formwerkzeugen kann dabei auf verschiedene Arten erfolgen und wird vorzugsweise so ausgestaltet, dass die Form des Faserlaminats stabil bleibt. Beispielsweise kann der Verfahrensschritt c) beinhalten, an der Wickelvorrichtung zunächst eine erste Wickelplatte und den Wickelkern abzutrennen, um das Faserlaminat nur noch mit der zweiten Wickelplatte auf dem ersten Formwerkzeug abzulegen, woraufhin die zweite Wickelplatte ebenfalls entfernt wird. Die zweite Wickelplatte dient dabei dazu, die Form des weichen, verformbaren Faserlaminats zu erhalten, bis es sicher auf dem ersten Formwerkzeug abgelegt ist.

Die Erfindung umfasst ferner ein Verfahren zur Herstellung eines Druckbehälters mit wenigstens einer Polkappenverstärkung, die auf diese Weise hergestellt wurde. Das Verfahren weist folgende Schritte auf:
i. Bereitstellen eines Innenbehälters, der einen zylindrischen Mittelbereich und zwei gewölbte Polkappenbereiche aufweist, welche die Öffnungen des zylindrischen Mittelbereiches abschließen;
ii. Herstellen wenigstens einer Polkappenverstärkung mit einem Verfahren nach einer Ausführungsform der Erfindung und Anbringen der Polkappenverstärkung auf einem gewölbten Polkappenbereich des Innenbehälters;
iii. Herstellen einer Umfangswicklung auf dem zylindrischen Mittelbereich des Innenbehälters;
iv. Umwickeln der Umfangswicklung und der wenigstens einen Polkappenverstärkung mit einer Außenwicklung.

Vorzugsweise werden beide Polkappenbereiche des Innenbehälters mit einer Polkappenverstärkung versehen, die mit einem Verfahren nach einer Ausführungsform der Erfindung hergestellt wurde. Ferner können die Polkappenverstärkungen mit dem erfindungsgemäßen Verfahren direkt auf dem Innenbehälter erzeugt werden, oder sie werden separat erzeugt und anschließend in den Polkappenbereichen des Innenbehälters fixiert. Wie bereits erwähnt, kann dies beispielsweise durch eine Verklebung erfolgen. Die anschließende Umfangswicklung auf dem zylindrischen Mittelbereich des Innenbehälters wird insbesondere so dick gewickelt, bis sich eine durchgehende und gleichmäßige Oberfläche mit der wenigstens einen Polkappenverstärkung ergibt. Ein solcher Herstellungsprozess hat den Vorteil, dass nach Anbringung der Polkappenverstärkungen eine kontinuierliche Bewicklung des Innenbehälters ohne wesentliche Unterbrechungen stattfinden kann. Dies führt zu einer hohen Produktivität.

In einer Ausführungsform der Erfindung ist vorgesehen, dass der wenigstens eine gewölbte Polkappenbereich des Innenbehälters einen Anschlussflansch aufweist, welchen die ringförmige Polkappenverstärkung nach dem Entfernen des Wickelkerns umgibt. Der Außendurchmesser des Wickelkerns ist entsprechend so gewählt, dass der Anschlussflansch durch die sich ergebende Öffnung im Faserlaminat geführt werden kann.

Von der Erfindung umfasst ist ferner ein Druckbehälter, aufweisend einen Innenbehälter und eine auf den Innenbehälter gewickelte Außenschicht aus Verstärkungsfasern, wobei der Innenbehälter einen zylindrischen Mittelbereich und zwei gewölbte Polkappenbereiche aufweist, welche die Öffnungen des zylindrischen Mittelbereiches abschließen. Die Außenschicht aus Verstärkungsfasern in wenigstens einem gewölbten Polkappenbereich des Innenbehälters weist eine Polkappenverstärkung mit Umfangswicklungen auf, die mit einem Verfahren nach einer Ausführungsform der Erfindung hergestellt wurde. Ein solcher Druckbehälter hat den Vorteil, dass im Polkappenbereich die erforderliche Radialverstärkung realisiert ist, ohne dass bei der Herstellung unnötiges Fasermaterial verbraucht wurde. Er ist leicht und gut in industriellem Maßstab zu fertigen.

Weitere Vorteile, Besonderheiten und zweckmäßige Weiterbildungen der Erfindung ergeben sich aus den Unteransprüchen und der nachfolgenden Darstellung bevorzugter Ausführungsbeispiele anhand der Abbildungen.

Von den Abbildungen zeigt:
- Fig. 1: einen Druckbehälter;
- Fig. 2: einen schematischen Längsschnitt durch einen Druckbehälter gemäß Fig. 1;
- Fig. 3: eine vergrößerte Ansicht eines Polkappenbereiches mit Radialverstärkung;
- Fig. 4: eine schematische Darstellung einer ersten Ausführungsform einer Wickelvorrichtung zur Herstellung einer Polkappenverstärkung;
- Fig. 5: eine Wickelvorrichtung gemäß Fig. 4 mit hergestelltem Faserlaminat;
- Fig. 6: die beispielhafte Anbringung eines Faserlaminats an einem ersten Formwerkzeug;
- Fig. 7: die Einbringung des Faserlaminats zwischen dem ersten und einem weiterem zweiten Formwerkzeug;
- Fig. 8: die Verformung des Faserlaminats unter Druck zwischen zwei Formwerkzeugen; und
- Fig. 9: a) eine schematische Darstellung einer zweiten Ausführungsform einer Wickelvorrichtung und b) eine Polkappenverstärkung mit variierender Wandstärke auf dem Polkappenbereich eines Innenbehälters.

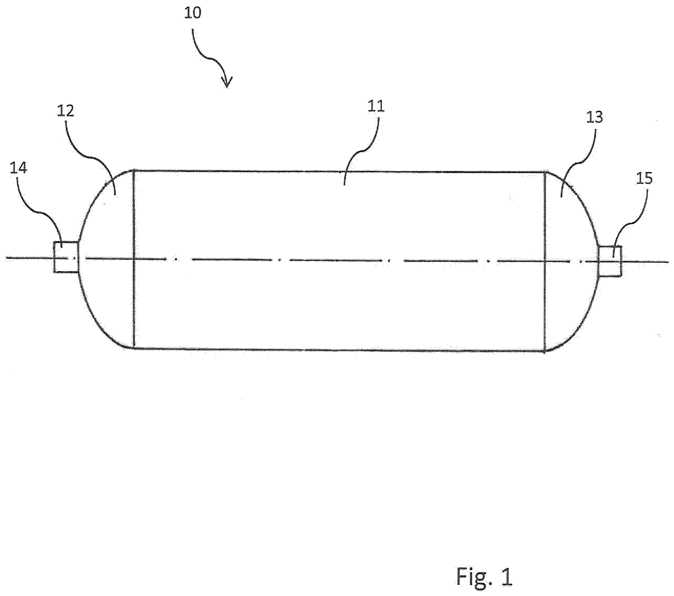

Ein mit der erfindungsgemäßen Polkappenverstärkung herzustellender Druckbehälter bzw. Verbunddruckbehälter ist beispielhaft in Fig. 1 dargestellt. Der Druckbehälter 10 weist einen zylindrischen Mittelteil 11 und zwei gewölbte Polkappen 12 und 13 auf, welche die Öffnungen des zylindrischen Mittelteils 11 abschließen. An diesen Polkappen 12, 13 können abstehende Anschlussflansche 14 und 15 vorgesehen sein, wobei Form und Anordnung dieser Anschlüsse 14, 15 jedoch nur schematisch und beispielhaft zu verstehen sind. Derartige Anschlussflansche werden auch als Bossanschluss bezeichnet. Der zylindrische Mittelteil 11 hat an seinen Enden Endabschnitte, an die sich die gewölbten Polkappen 12, 13 anschließen.

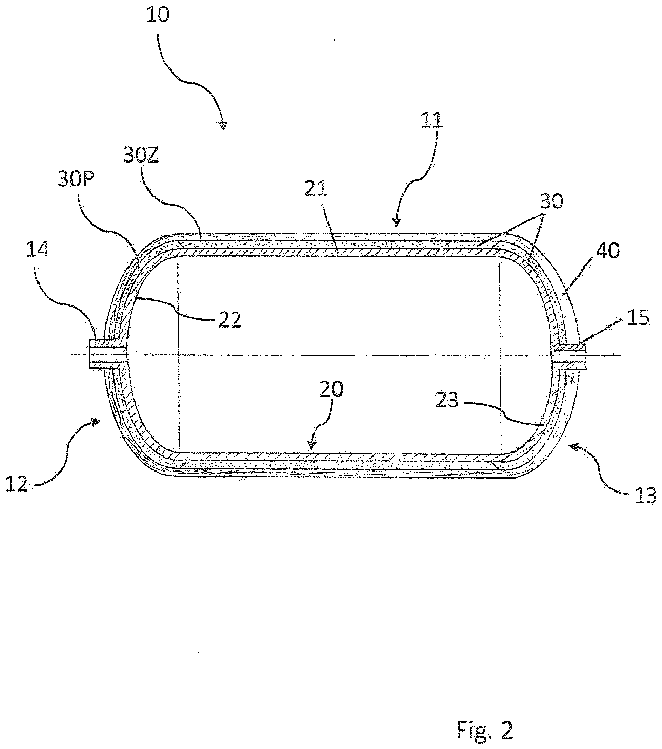

Ein solcher Druckbehälter 10 wird durch Verstärkung eines Innenbehälters mit einer Außenschicht aus Faserverstärkung hergestellt. Fig. 2 zeigt diesen Aufbau des Druckbehälters 10 in einem schematischen Längsschnitt. Dabei ist ein Innenbehälter 20 mit einer Außenschicht aus Verstärkungsfasern umwickelt, was Radial- und Axialverstärkungen umfasst. Die Form des Innenbehälters 20 entspricht im Wesentlichen der Form des herzustellenden Druckbehälters 10, so dass der Innenbehälter 20 einen zylindrischen Mittelbereich 21 und zwei gewölbte Polkappenbereiche 22 und 23 aufweist, welche die Öffnungen des zylindrischen Mittelbereiches 21 abschließen. Der Innenbehälter 20 wird vorzugsweise durch einen Kunststoffliner gebildet, dessen Form beispielsweise in einem Extrusionsblasverfahren hergestellt wurde. Ein solcher Innenbehälter 20 wird mit Verstärkungsfasern unter verschiedenen Winkeln und mit verschiedenen Verläufen bewickelt.

Fig. 2 zeigt eine Faserverstärkung eines Kunststoffliners 20, wie diese vorteilhaft ausgeführt ist. Dies sieht eine Radialverstärkung 30 auf dem gesamten Liner 20 vor, wobei dies den zylindrischen Mittelbereich 21 und die beiden Polkappenbereiche 22 und 23 umfasst. Ferner ist eine Axialverstärkung 40 über den kompletten Behälter 10 vorgesehen. Durch diese ideale Faserausrichtung in Kraftrichtung können die maximalen Laminat- und Fasereigenschaften ausgeschöpft werden.

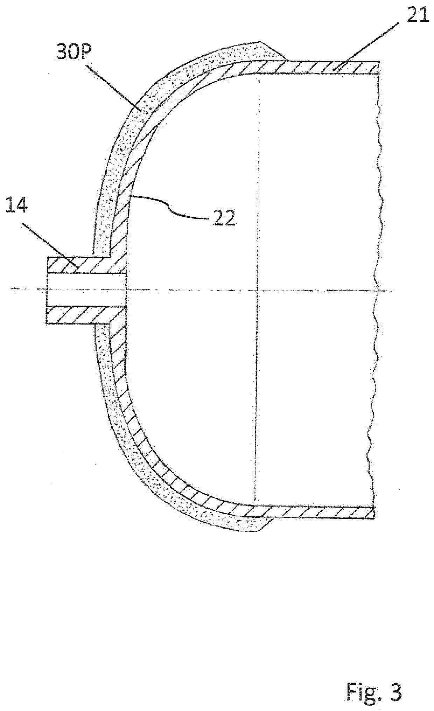

Da eine Radialverstärkung 30 nicht ohne weiteres kontinuierlich auf einem gewölbten Polkappenbereich gewickelt werden kann, teilt sich diese Radialverstärkung 30 in eine Zylinderverstärkung 30Z und zwei Polkappenverstärkungen 30P auf. Die Zylinderverstärkung 30Z befindet sich im zylindrischen Bereich des Druckbehälters 10, während jede Polkappe jeweils eine Polkappenverstärkung aufweist, wobei in Fig. 2 nur eine linke Polkappenverstärkung exemplarisch mit der Bezugsziffer 30P versehen ist. Fig. 3 zeigt den linken Polkappenbereich 22 eines Liners noch einmal vergrößert. Die Polkappenverstärkung 30P überdeckt den Bereich vom Bossanschluss 14 bis zum zylindrischen Mittelbereich 21 des Liners und ragt optional bis in den zylindrischen Mittelbereich 21 hinein, wie es in der Ausführungsform der Fig. 3 gegeben ist. Die beiden Polkappenverstärkungen 30P werden vorzugsweise vor der Zylinderverstärkung 30Z hergestellt und bevor die Axialverstärkung 40 aufgebracht wird. Die Herstellung einer Polkappenverstärkung 30P in einem separaten Wickelprozess wird im Folgenden beschrieben.

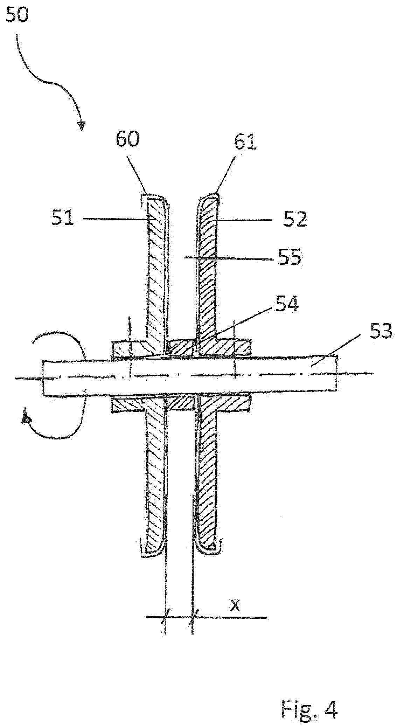

Für den separaten Wickelprozess wird ein Wickelwerkzeug verwendet und die Polkappenverstärkung 30P wird teilweise getrennt von dem Liner 20 erzeugt. Ein solches Wickelwerkzeug 50 ist schematisch in Fig. 4 dargestellt. Es besteht im Wesentlichen aus zwei Wickelplatten 51 und 52, die parallel und in einem Abstand zueinander auf eine Wickelachse 53 gespannt sind, so dass sich zwischen den Platten 51, 52 ein vorgegebener Spalt 55 mit einer Breite x ergibt. Am Boden des Spaltes 55 wird ein ringförmiger Abstandhalter bzw. Wickelkern 54 eingebracht. Für ein einfaches späteres Handling werden die Innenseiten beider Wickelplatten ferner in einer Ausführungsform jeweils mit einer dehnfähigen, hitzebeständigen Folie 60, 61 belegt.

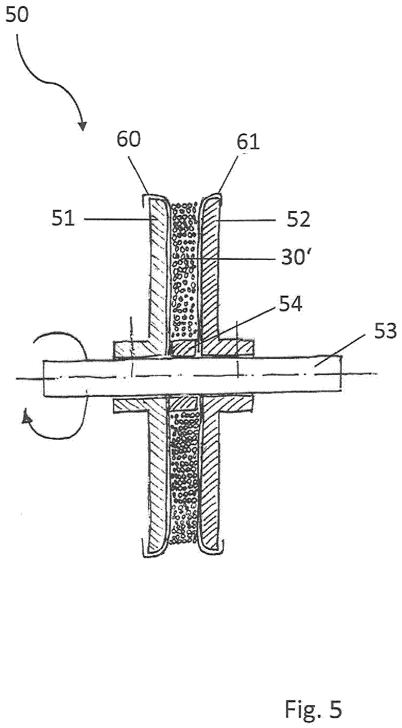

Der Spalt 55 zwischen den zwei Wickelplatten 51, 52 wird mit Umfangslagen vollgewickelt, wobei mehrere Umfangslagen nebeneinander und übereinander um den Wickelkern 54 gewickelt werden, indem die Wickelvorrichtung 50 um die Wickelachse 53 rotiert. Bei den Umfangslagen handelt es sich beispielsweise um in situ getränkte Verstärkungsfasern oder Towpregs. Dies kann parallel mit mehreren Wickelwerkzeugen durchgeführt werden, was die Produktivität erhöht. Fig. 5 zeigt ein Wickelwerkzeug 50 nach dem Wickelprozess, dessen Spalt 55 mit einem Faserlaminat aus Umfangswicklungen gefüllt ist. Dieses Herstellungsstadium des mit Harz getränkten Faserlaminats ist mit der Bezugsziffer 30' bezeichnet.

Anschließend wird das Wickelwerkzeug 50 vorzugsweise gedreht und in eine Position gebracht, in welcher die Wickelplatten und damit das Faserlaminat 30' horizontal liegen. Die Wickelachse 53 und eine Wickelplatte werden entfernt, wobei das Faserlaminat 30' auf der verbleibenden Wickelplatte 51 liegt. Die Folie 60, 61 verbleibt dabei auf den beiden Seiten des Faserlaminats 30', während der Wickelkern 54 optional ebenfalls entfernt wird.

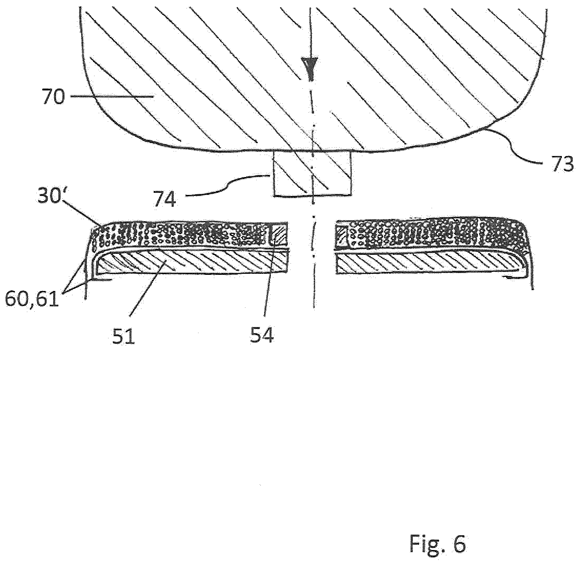

Ein erstes Formwerkzeug 70 mit der konvexen Außenkontur 73 des Polkappenbereiches des Liners wird aufgesetzt, so dass das Faserlaminat 30' direkt anliegen kann, wenn die verbleibende Wickelplatte 51 ebenfalls entfernt wird. Bei einer alternativen Vorgehensweise wird die Anordnung der Fig. 6 um 180° gedreht, so dass das Faserlaminat 30' über dem Formwerkzeug 70 liegt. Dabei wird das Faserlaminat 30' auf geeignete Art gehalten, bis es von oben auf dem Formwerkzeug 70 abgelegt wird. Dabei kann vorgesehen sein, dass die Bossform 74 den Wickelkern 54 und die Wickelplatte 51 nach oben wegdrückt, so dass das Faserlaminat 30' anschließend ringförmig um die Bossform 74 aufliegen kann. Somit wird eine am ersten Formwerkzeug 70 vorhandene Bossform 74 durch die mittige Öffnung im Faserlaminat 30' geführt, die sich durch den Wickelkern 54 und die Wickelachse 53 gebildet hat.

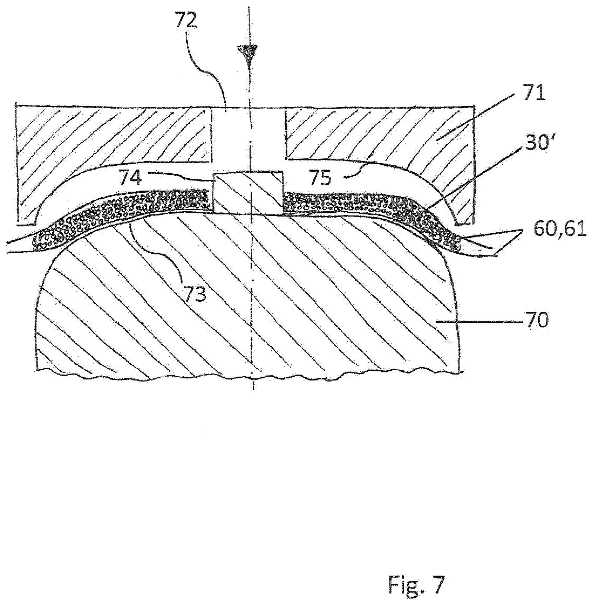

Alternativ kann als erstes Formwerkzeug auch der Liner selbst eingesetzt werden. In diesem Fall handelt es sich bei der Bossform 74 um einen am Liner vorhandenen Bossanschluss. Das Faserlaminat 30' umgibt die Bossform 74 bzw. den Bossanschluss dann folglich ringförmig. Die Abmessungen sind entsprechend aufeinander abgestimmt. Die gesamte Anordnung der Fig. 6 wird anschließend um 180° gedreht bzw. sie ist schon gedreht, wenn das Faserlaminat 30' von oben abgelegt wurde. Durch die beidseitige Abdeckung des Faserlaminats 30' durch die Folien 60, 61 ist dies ohne Probleme möglich. Fig. 7 zeigt die gedrehte Anordnung mit dem Faserlaminat 30', welches nun von oben auf dem ersten Formwerkzeug 70 aufliegt und dessen Form sich bereits etwas an dessen Außenkontur 73 angepasst hat.

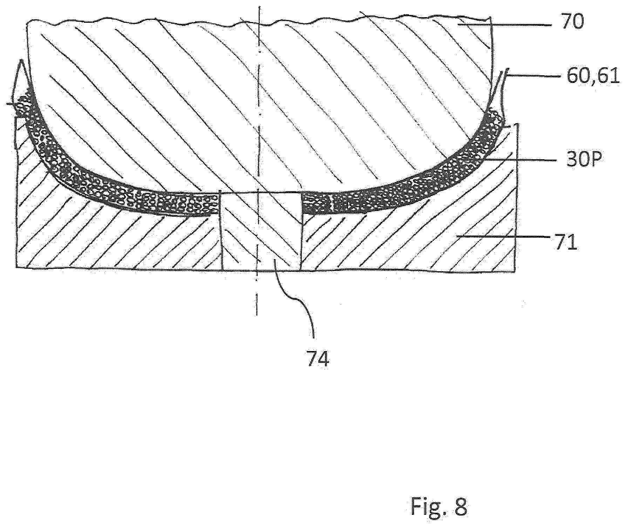

Von oben wird ein zweites Formwerkzeug 71 mit der gewünschten Außenkontur der Radialverstärkung aufgesetzt, wie es Fig. 7 zeigt. Die konkave Innenkontur 75 des zweiten Formwerkzeugs 71 gibt die Außenkontur der herzustellenden Polkappenverstärkung vor. Die Außenkontur der Radialverstärkung kann dabei unterschiedlich je nach Behälterauslegung ausgeführt und durch das zweite Formwerkzeug 71 vorgegeben werden. Das Faserlaminat 30' wird nun zwischen den beiden Formwerkzeugen 70, 71 unter Druck auf Endkontur geformt (Fig. 8). Dies ist möglich, weil die radial gewickelten Schichten des Faserlaminats 30' aufeinander abgleiten können, ohne dass es zu Verwerfungen kommt.

Das Faserlaminat 30' wird zwischen den Formwerkzeugen 70, 71 und den Folien 60, 61 geliert, anschließend wird es entformt. Das entstandene geformte und gelierte Faserlaminat bildet nun eine Polkappenverstärkung, die in Fig. 8 mit der Bezugsziffer 30P gekennzeichnet ist. Die Formwerkzeuge 70,71 müssen nicht gesäubert werden, weil sie nicht mit dem Faserlaminat in Kontakt gekommen sind. Die Folien 60, 61 lassen sich ohne Mühe abziehen.

Die so erzeugte Polkappenverstärkung 30P kann wie in Fig. 3 gezeigt auf den Polkappenbereich 22 eines Liners aufgebracht werden, indem der Bossanschluss 14 durch die mittige Öffnung im Faserlaminat geführt wird. Vorzugsweise wird die Polkappenverstärkung 30P auf dem Liner verklebt. Die innere Folie 61 kann dabei zwischen Liner und Polkappenverstärkung 30P verbleiben oder zuvor entfernt werden. Wird als erstes Formwerkzeug der Liner selbst verwendet, wird lediglich das zweite Formwerkzeug 71 entfernt und die Polkappenverstärkung 30P verbleibt auf dem Liner. In diesem Fall verbleibt die Folie 61 zwischen Liner und Polkappenverstärkung 30P.

Eine oder beide Polkappenbereiche 22, 23 eines Liners 20 werden so mit vorgefertigten Polkappenverstärkungen versehen. In dem nachfolgenden Wickelprozess wird der Liner zunächst zwischen den beiden Polkappenverstärkungen im zylindrischen Mittelbereich 21 mit Umfangslagen bewickelt, bis sich eine gleichmäßige Oberfläche mit den Polkappen ergibt (siehe Fig. 2). Diese Zylinderverstärkung 30Z bildet zusammen mit den beiden Polkappenverstärkungen 30P die Radialverstärkung 30 des Druckbehälters 10. Daran schließt sich die weitere Bewicklung mit Helix- und Umfangslagen gemäß der Druckbehälterauslegung an, wodurch sich eine Außenverstärkung 40 ergibt. Vor der Aufbringung der Außenverstärkung wird die äußere Folie 60 vorzugsweise entfernt.

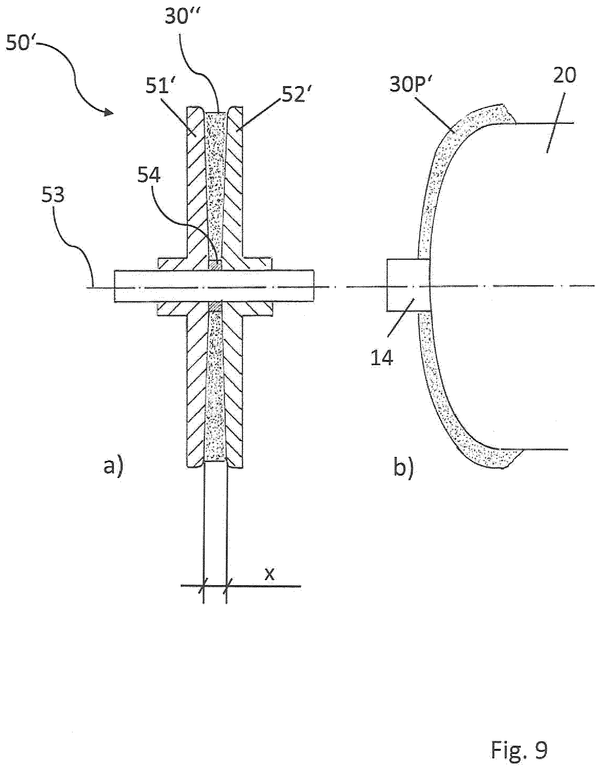

Die einfachste Ursprungsform des Faserlaminats 30' entsteht dabei, wenn man die Innenflächen der Wickelplatten 51, 52 rechtwinklig zur Wickelachse 53 ausführt, so dass der Abstand x zwischen den beiden Wickelplatten 51, 52 in radialer Richtung konstant ist, wie es bei der Wickelvorrichtung 50 gemäß der Ausführungsform der Fig. 4 gegeben ist. Dieas gewickelte Faserlaminat 30' hat dann in axialer Richtung gesehen überall die gleiche Wandstärke x. Soll diese Wandstärke aber nach außen (mit zunehmenden Durchmesser) dicker werden, so kann das mit einer Wickelvorrichtung 50' mit entsprechend konisch verlaufenden Innenflächen der Wickelplatten 51', 52' realisiert werden, wie es in Fig. 9 a) gezeigt ist. Der Abstand x zwischen den beiden Wickelplatten 51', 52' verringert sich dabei zum Wickelkern 54 hin. Das bei der Wicklung entstehende Faserlaminat 30" hat dann außen eine größere Wandstärke als innen, was nach der Verformung zwischen den Formwerkzeugen 70, 71 im Wesentlichen beibehalten werden kann, wie es die resultierende Polkappenverstärkung 30P' in Fig. 9 b) zeigt.

### Bezugszeichenliste:

- 10: Druckbehälter
- 11: Mittelteil
- 12,13: Polkappe
- 14,15: Anschlussflansch, Bossanschluss
- 20: Innenbehälter, Liner
- 21: Mittelbereich
- 22,23: Polkappenbereich
- 30: Radialverstärkung
- 30',30": Faserlaminat, getränkt
- 30P,30P': Polkappenverstärkung
- 30Z: Zylinderverstärkung
- 40: Außenwicklung
- 50,50': Wickelvorrichtung
- 51,51',52,52': Wickelplatte
- 53: Wickelachse
- 54: Wickelkern
- 55: Spalt
- 60,61: Folie
- 70: Erstes Formwerkzeug
- 71: Zweites Formwerkzeug
- 72: Öffnung
- 73: Außenkontur
- 74: Bossform
- 75: Innenkontur

## Patentansprüche

1. Verfahren zur Herstellung einer Polkappenverstärkung (30P) eines Druckbehälters (10), aufweisend einen Innenbehälter (20) und eine auf den Innenbehälter (20) gewickelte Außenschicht aus Verstärkungsfasern, wobei der Innenbehälter (20) einen zylindrischen Mittelbereich (21) und zwei gewölbte Polkappenbereiche (22; 23) aufweist, welche die Öffnungen des zylindrischen Mittelbereiches (21) abschließen,
**gekennzeichnet durch** folgende Schritte:
a) Bereitstellen einer Wickelvorrichtung (50), aufweisend zwei voneinander beabstandete Wickelplatten (51;52), die zwischen sich einen Spalt (55) ausbilden, in dem sich ein Wickelkern (54) befindet;
b) Herstellen eines mit Harz getränkten Faserlaminats (30') innerhalb des Spaltes (55), welches durch wiederholte Umwicklung des Wickelkerns (54) in Umfangsrichtung erzeugt wird;
c) Lösen des Faserlaminats (30') von der Wickelvorrichtung (50) und Aufbringen des Faserlaminats (30') auf ein erstes Formwerkzeug (70), welches die gewölbte Außenkontur eines Polkappenbereiches (22;23) des Innenbehälters (20) aufweist;
d) Positionieren eines zweiten Formwerkzeugs (71), welches die Außenkontur der herzustellenden Polkappenverstärkung (30P) aufweist, um das Faserlaminat (30') zwischen dem ersten Formwerkzeug (70) und dem zweiten Formwerkzeug (71) einzuschließen;
e) Ausformen der Form der Polkappenverstärkung (30P) zwischen den beiden Formwerkzeugen (70;71), indem das Faserlaminat (30') zwischen den beiden Formwerkzeugen (70;71) unter Druck verformt wird;
f) Aushärten des Faserlaminats (30') zu der Polkappenverstärkung (30P).

2. Verfahren nach Anspruch 1,
**dadurch gekennzeichnet, dass** das erste Formwerkzeug (70) der gewölbte Polkappenbereich (22;23) des Innenbehälters (20) ist, für welchem die Polkappenverstärkung (30P) herzustellen ist, und das zweite Formwerkzeug (71) nach dem Aushärten des Faserlaminats (30') zu der Polkappenverstärkung (30P) entfernt wird.

3. Verfahren nach Anspruch 1,
**dadurch gekennzeichnet, dass** die ausgehärtete Polkappenverstärkung (30P) aus den Formwerkzeugen (70;71) entformt und auf den gewölbten Polkappenbereich (22;23) des Innenbehälters (20) aufgebracht wird.

4. Verfahren nach einem oder mehreren der Ansprüche 1 bis 3,
**dadurch gekennzeichnet, dass** der Abstand zwischen den Innenflächen der Wickelplatten (51; 52) der Wickelvorrichtung (50) konstant ist oder sich zum Wickelkern (54) hin verringert.

5. Verfahren nach einem oder mehreren der Ansprüche 1 bis 4,
**dadurch gekennzeichnet, dass** die Innenseiten der Wickelplatten (50;51) vor der Herstellung des Faserlaminats (30') jeweils mit einer lösbaren Folie (60;61) belegt werden, die anschließend zusammen mit dem Faserlaminat (30') von der Wickelvorrichtung (50) gelöst werden.

6. Verfahren nach Anspruch 5,
**dadurch gekennzeichnet, dass** das Faserlaminat (30') zusammen mit den Folien (60;61) zwischen den Formwerkzeugen (70;71) verformt und ausgehärtet wird.

7. Verfahren nach einem oder mehreren der Ansprüche 1 bis 6,
**dadurch gekennzeichnet, dass** der Verfahrensschritt c) beinhaltet, zunächst eine erste Wickelplatte (52) und den Wickelkern (54) abzutrennen, um das Faserlaminat (30') mit der zweiten Wickelplatte (51) auf dem ersten Formwerkzeug (70) abzulegen, woraufhin die zweite Wickelplatte (51) ebenfalls entfernt wird.

8. Verfahren zur Herstellung eines Druckbehälters (10) mit wenigstens einer Polkappenverstärkung (30P),
**gekennzeichnet durch** folgende Schritte:
i. Bereitstellen eines Innenbehälters (20), der einen zylindrischen Mittelbereich (21) und zwei gewölbte Polkappenbereiche (22; 23) aufweist, welche die Öffnungen des zylindrischen Mittelbereiches (21) abschließen;
ii. Herstellen wenigstens einer Polkappenverstärkung (30P) mit einem Verfahren nach einem der Ansprüche 1 bis 7 und Anbringen der Polkappenverstärkung (30P) auf einem gewölbten Polkappenbereich (22;23) des Innenbehälters (20);
iii. Herstellen einer Umfangswicklung (30Z) auf dem zylindrischen Mittelbereich (21) des Innenbehälters (240);
iv. Umwickeln der Umfangswicklung (30Z) und der wenigstens einen Polkappenverstärkung (30P) mit einer Außenwicklung (40).

9. Verfahren nach Anspruch 8,
**dadurch gekennzeichnet, dass** der wenigstens eine gewölbte Polkappenbereich (22;23) des Innenbehälters (240) einen Anschlussflansch (14;15) aufweist, welchen die ringförmige Polkappenverstärkung (30P) nach dem Entfernen des Wickelkerns (54) umgibt.

10. Druckbehälter (10), aufweisend einen Innenbehälter (20) und eine auf den Innenbehälter (20) gewickelte Außenschicht aus Verstärkungsfasern, wobei der Innenbehälter (20) einen zylindrischen Mittelbereich (21) und zwei gewölbte Polkappenbereiche (22; 23) aufweist, welche die Öffnungen des zylindrischen Mittelbereiches (21) abschließen,
**dadurch gekennzeichnet, dass** die Außenschicht aus Verstärkungsfasern in wenigstens einem gewölbten Polkappenbereich (22;23) des Innenbehälters (20) eine Polkappenverstärkung (30P) mit Umfangswicklungen aufweist, die mit einem Verfahren nach einem der Ansprüche 8 und 9 hergestellt wurde.

## Claims

1. Method for producing a polar cap reinforcement (30P) of a pressure vessel (10) comprising an inner vessel (20) and an outer layer of reinforcing fibres, which is wound around the inner vessel (20), wherein the inner vessel (20) has a cylindrical central region (21) and two domed polar cap regions (22;23) which seal the openings of the cylindrical central region (21),
**characterized by** the following steps:
a) providing a winding device (50) comprising two winding plates (51;52), which are spaced apart from one another and form a gap (55) between them, in which there is a winding core (54);
b) producing a resin-impregnated fibre laminate (30') inside the gap (55), which is generated by repeated winding around the winding core (54) in the circumferential direction;
c) detaching the fibre laminate (30') from the winding device (50) and applying the fibre laminate (30') onto a first moulding tool (70) which has the domed outer contour of a polar cap region (22;23) of the inner vessel (20);
d) positioning a second moulding tool (71), which has the outer contour of the polar cap reinforcement (30P) to be produced, in order to enclose the fibre laminate (30') between the first moulding tool (70) and the second moulding tool (71);
e) forming the shape of the polar cap reinforcement (30P) between the two moulding tools (70;71) by deforming the fibre laminate (30') between the two moulding tools (70;71) under pressure;
f) curing the fibre laminate (30') to form the polar cap reinforcement (30P).

2. Method according to Claim 1,
**characterized in that** the first moulding tool (70) is the domed polar cap region (22;23) of the inner vessel (20), for which the polar cap reinforcement (30P) is to be produced, and the second moulding tool (71) is removed after the curing of the fibre laminate (30') to form the polar cap reinforcement (30P).

3. Method according to Claim 1,
**characterized in that** the cured polar cap reinforcement (30P) is released from the moulding tools (70;71) and applied onto the domed polar cap region (22;23) of the inner vessel (20).

4. Method according to one or more of Claims 1 to 3,
**characterized in that** the distance between the inner faces of the winding plates (51;52) of the winding device (50) is constant or decreases toward the winding core (54).

5. Method according to one or more of Claims 1 to 4,
**characterized in that**, before the fibre laminate (30') is produced, the inner sides of the winding plates (50;51) are each coated with a detachable film (60;61) which is subsequently detached from the winding device (50) together with the fibre laminate (30').

6. Method according to Claim 5,
**characterized in that** the fibre laminate (30') is deformed and cured together with the films (60;61) between the moulding tools (70;71).

7. Method according to one or more of Claims 1 to 6,
**characterized in that** method step c) involves initially separating a first winding plate (52) and the winding core (54) in order to place the fibre laminate (30') with the second winding plate (51) on the first moulding tool (70), and then also removing the second winding plate (51).

8. Method for producing a pressure vessel (10) having at least one polar cap reinforcement (30P),
**characterized by** the following steps:
i. providing an inner vessel (20), which has a cylindrical central region (21) and two domed polar cap regions (22;23), which seal the openings of the cylindrical central region (21);
ii. producing at least one polar cap reinforcement (30P) by a method according to one of Claims 1 to 7 and applying the polar cap reinforcement (30P) on a domed polar cap region (22;23) of the inner vessel (20);
iii. producing a circumferential winding (30Z) on the cylindrical central region (21) of the inner vessel (20);
iv. winding an outer winding (40) around the circumferential winding (30Z) and the at least one polar cap reinforcement (30P).

9. Method according to Claim 8,
**characterized in that** the at least one domed polar cap region (22;23) of the inner vessel (20) has a connecting flange (14;15) which the annular polar cap reinforcement (30P) surrounds after the removal of the winding core (54).

10. Pressure vessel (10) comprising an inner vessel (20) and an outer layer of reinforcing fibres, which is wound around the inner vessel (20), wherein the inner vessel (20) has a cylindrical central region (21) and two domed polar cap regions (22;23) which seal the openings of the cylindrical central region (21),
**characterized in that** the outer layer of reinforcing fibres has, in at least one domed polar cap region (22;23) of the inner vessel (20), a polar cap reinforcement (30P) having circumferential windings, which has been produced by a method according to one of Claims 8 and 9.

## Revendications

1. Procédé de fabrication d'un renforcement (30P) de calotte d'un récipient sous pression (10), présentant un récipient interne (20) et une couche externe enroulée sur le récipient interne (20), en fibres de renforcement, le récipient interne (20) présentant une zone centrale (21) cylindrique et deux zones (22 ; 23) bombées de calotte, qui ferment les ouvertures de la zone centrale (21) cylindrique,
**caractérisé par** les étapes suivantes :
a) mise à disposition d'un dispositif d'enroulement (50), présentant deux plaques d'enroulement (51 ; 52) écartées l'une de l'autre, qui forment entre elles une fente (55) dans laquelle se trouve un noyau d'enroulement (54) ;
b) fabrication d'un stratifié fibreux (30) imprégné de résine à l'intérieur de la fente (55), qui est obtenu par enroulement répété du noyau d'enroulement (54) dans la direction périphérique ;
c) détachement du stratifié fibreux (30') du dispositif d'enroulement (50) et application du stratifié fibreux (30') sur un premier outil de moulage (70), qui présente le contour externe bombé d'une zone (22 ; 23) de calotte du récipient interne (20) ;
d) positionnement d'un deuxième outil de moulage (71), qui présente le contour externe du renforcement (30P) de calotte à fabriquer, afin de renfermer le stratifié fibreux (30') entre le premier outil de moulage (70) et le deuxième outil de moulage (71) ;
e) moulage de la forme du renforcement (30P) de calotte entre les deux outils de moulage (70 ; 71), en ce que le stratifié fibreux (30') est déformé sous pression entre les deux outils de moulage (70 ; 71) ;
f) durcissement du stratifié fibreux (30') en renforcement (30P) de calotte.

2. Procédé selon la revendication 1,
**caractérisé en ce que** le premier outil de moulage (70) est la zone (22 ; 23) bombée de calotte du récipient interne (20) pour lequel le renforcement (30P) de calotte doit être fabriqué et le deuxième outil de moulage (71) est enlevé après le durcissement du stratifié fibreux (30') en renforcement (30P) de calotte.

3. Procédé selon la revendication 1,
**caractérisé en ce que en ce que** le renforcement (30P) de calotte durci est démoulé des outils de moulage (70 ; 71) et appliqué sur la zone (22 ; 23) bombée de calotte du récipient interne (20).

4. Procédé selon l'une ou plusieurs des revendications 1 à 3,
**caractérisé en ce que** la distance entre les surfaces internes des plaques d'enroulement (51 ; 52) du dispositif d'enroulement (50) est constante ou diminue vers le noyau d'enroulement (54).

5. Procédé selon l'une ou plusieurs des revendications 1 à 4,
**caractérisé en ce que** les faces internes des plaques d'enroulement (50 ; 51) sont recouvertes, avant la fabrication du stratifié fibreux (30'), à chaque fois par une feuille amovible (60 ; 61), qui est ensuite détachée du dispositif d'enroulement (50) conjointement avec le stratifié fibreux (30').

6. Procédé selon la revendication 5,
**caractérisé en ce que** le stratifié fibreux (30') est déformé et durci conjointement avec les feuilles (60 ; 61) entre les outils de moulage (70 ; 71).

7. Procédé selon l'une ou plusieurs des revendications 1 à 6,
**caractérisé en ce que** l'étape de procédé c) comporte d'abord la séparation d'une première plaque d'enroulement (52) et du noyau d'enroulement (54) afin de placer le stratifié fibreux (30') conjointement avec la deuxième plaque d'enroulement (51) sur le premier outil de moulage (70), puis la deuxième plaque d'enroulement (51) est également enlevée.

8. Procédé de fabrication d'un récipient sous pression (10) présentant au moins un renforcement (30P) de calotte,
**caractérisé par** les étapes suivantes :
i. mise à disposition d'un récipient interne (20), qui présente une zone centrale (21) cylindrique et deux zones (22 ; 23) bombées de calotte, qui ferment les ouvertures de la zone centrale (21) cylindrique ;
ii. fabrication d'au moins un renforcement (30P) de calotte par un procédé selon l'une des revendications 1 à 7 et application du renforcement (30P) de calotte sur une zone (22 ; 23) bombée de calotte du récipient interne (20) ;
iii. fabrication d'un enroulement périphérique (30Z) sur la zone centrale (21) cylindrique du récipient interne (240) ;
iv. enroulement de l'enroulement périphérique (30Z) et dudit au moins un renforcement (30P) de calotte par un enroulement externe (40).

9. Procédé selon la revendication 8,
**caractérisé en ce que** ladite au moins une zone (22;23) bombée de calotte du récipient interne (240) présente une bride de raccordement (14 ; 15) qui entoure le renforcement (30P) annulaire de calotte après l'enlèvement du noyau d'enroulement (54).

10. Récipient sous pression (10) présentant un récipient interne (20) et une couche externe enroulée sur le récipient interne (20), en fibres de renforcement, le récipient interne (20) présentant une zone centrale (21) cylindrique et deux zones (22 ; 23) bombées de calotte, qui ferment les ouvertures de la zone centrale (21) cylindrique,
**caractérisé en ce que** la couche externe en fibres de renforcement présente, dans au moins une zone (22 ; 23) bombée de calotte du récipient interne (20), un renforcement (30P) de calotte présentant des enroulements périphériques qui a été fabriqué à l'aide d'un procédé selon l'une des revendications 8 et 9.
